# EUROPEAN PATENT SPECIFICATION

(11) **EP 3 371 932 B1**
(45) Date of publication and mention of the grant of the patent: **21.10.2020**
(21) Application number: 15794515.5
(22) Date of filing: 06.11.2015
(51) Int. Cl.: H04L 12/24

(54) **CONFIGURATION TECHNIQUE FOR A NETWORK ELEMENT IN A COMMUNICATION NETWORK**
KONFIGURATIONSTECHNIK FÜR EIN NETZWERKELEMENT IN EINEM KOMMUNIKATIONSNETZWERK
TECHNIQUE DE CONFIGURATION POUR UN ÉLÉMENT DE RÉSEAU DANS UN RÉSEAU DE COMMUNICATION

(43) Date of publication of application: 12.09.2018
(73) Proprietor: Telefonaktiebolaget LM Ericsson (publ), 164 83 Stockholm (SE)
(72) Inventor: MAGNUSSON, Björn, S-582 27 Linköping (SE); HUBINETTE, Ulf, S-587 29 Linköping (SE); LEINONEN, Esko, S-616 34 Åby (SE); LOBORG, Peter, S-58330 Linköping (SE); NYBERG, Camilla, S-586 63 Linköping (SE)
(74) Representative: Ericsson
(86) International application number: PCT/EP2015/075981
(87) International publication number: WO 2017/076476

(56) References cited:
- WO-A1-2012/136261
- US-A1- 2008 240 104
- US-A1- 2010 015 992
- US-B1- 8 214 880

## Description

### Technical Field

The present disclosure generally relates to communication networks. In more detail, a technique for configuring a network element in a communication network is presented. The technique may be implemented in the form of methods, devices, networks or computer programs.

### Background

The complexity of modern communication networks is constantly increasing. The network elements used in such communication networks also become increasingly complex, often with over thousands of individual configuration parameters and hundreds of parameter groups or parameter classes for defining individual configuration concepts. Each parameter group or parameter class, in turn, may occur in several instances on a small network element, and in up to as many as several thousands of instances on a large network element.

In communication networks standardized by the 3rd Generation Partnership Project (3GPP), network elements can be configured using a so-called Managed Object Model (MOM) to describe the configured objects. A set of instances of such objects, called a Managed Information Base (MIB), can be used to describe the actual configuration of network elements. As an alternative, network elements can also be configured using the Simple Network Management Protocol (SNMP) or the Netconf protocol, both providing a concept similar to that of the 3GPP MOM with MIBs describing actual configurations.

As said, classes of configuration parameters may be defined for an efficient configuration parameter handling. In 3GPP, the term Managed Object Class (MOC) is used when referencing the description of a class of configuration parameters, while the term Managed Object Instance (MO Instance) describes the actual configuration parameters. This concept is equally applicable for other configuration approaches, such as SNMP or Netconf.

The network elements in a communication network are typically configured by a network management component, such as an Operations Support System (OSS) or a Network Management System (NMS). The network management component has the responsibility to monitor the communication network and to provide configuration tools (or at least to provide functionality to enable yet other tools to monitor and configure the network). One common monitoring approach is to continuously make sure that all parts of the communication network remain configured as intended. For example, it has to be ensured that a temporary re-configuration used for trouble shooting or for fixing a temporary problem does not remain active after these actions have been completed.

With the emergence of heterogeneous communication networks and with the upcoming 5^{th} Generation (5G) communication networks, existing networks are further expanded using a multitude of small nodes (e.g., to provide extra coverage or redundant functionality within a limited area). As such, it is expected that the complexity of configuration management will increase further.

In order to simplify the configuration management of large communication networks, certain standardized solutions have been defined for a limited set of network element types and network element functionalities. The idea is that using a vendor agnostic configuration model for a well-known functionality over a common protocol such as SNMP or Netconf, it will be possible to standardize a set of commonly used or alternative configurations for that functionality. Such configuration parameter sets are also called profiles. Existing profile-based solutions include so-called "Standardized Configuration Profiles" and "OSS Stored Profiles".

Standardized Configuration Profiles are intended to cover certain network element types and functionalities using a vendor agnostic model. OSS Stored Profiles may cover any network element type and functionality. Both profile types are normally stored "off node" (e.g., in the OSS or any other network management component), which means that any re-configuration or monitoring of the network element using the profiles involves the network management component and a common protocol such as SNMP or Netconf.

It has been found that the usage of the Standardized Configuration Profiles works reliably only for "mature" functionality areas that are well understood and in which a small set of alternative configurations covers a majority of use cases. Since the standardization of specific new profiles is a slow process, the concept of Standardized Configuration Profiles is not very useful for operators that need to work with other profiles than those defined in the standard.

Also the OSS Stored Profiles suffer from shortcomings. They are software version specific profiles, which means that they are not necessarily reusable for an individual network element after a software update, or in a larger communication network where the same network element type occurs many times but with different software versions. This means that a profile applicable to one software version of a network element may not be applicable to an updated software version of the same network element due to changes between different versions.

It has also been found that the task of configuring a set of network elements with OSS Stored Profiles basically includes the same steps as if an operator was to reconfigure these network elements manually. Each configuration command must be sent down to each network element each time the operator wishes to apply a new profile or switch between two profiles.

Both the Standardized Configuration Profiles and the OSS Stored Profiles are also cumbersome when it comes to monitoring, or auditing, an individual configuration profile (e.g., to verify that the parameter configuration according to a current profile has not been overwritten by a local configuration operation). In principle, such monitoring requires reading the corresponding configuration parameter values from the network elements across the communication network to the network management component. Then, in a next step, the configuration parameter values have to be individually compared with the intended settings for each individual network element, which consumes a lot of processing resources at the network management component.

Document WO 2012/136261 A1 may be construed to disclose a network node having at least two different configurations, one of which is in use at a time, and an occurrence of a trigger event causes that a configuration currently in use is changed to a configuration associated with the trigger event.

Document US 2010/015992 A1 may be construed to disclose a technique in which a triggering event relating to a function of the mobile communication device is detected. Based on detection, the physical configuration of the mobile communication device is automatically adjusted. A database associating triggering events with physical configurations, in accordance with a predefined policy, may be retrieved. The detected triggering event may be correlated to a particular physical configuration within the database to implement automatic adjustment of the physical configuration of the mobile communication device.

### Summary

There is a need for a technique for configuring a network element in a communication network that avoids one or more of the above problems, or other problems.

According to the disclosure, there are provided methods, a computer-readable medium and apparatuses according to the independent claims. Developments are set forth in the dependent claims.

According to a first aspect a method of configuring a network element in a communication network is presented. The method is performed by the network element and comprises with the step of receiving at least one configuration profile. The configuration profile defines a first set of one or more parameter values for one or more associated configuration parameters of the network element as well as one or more activation conditions for the first set of one or more parameter values. The method further comprises determining whether or not the one or more activation conditions are fulfilled and, if the one or more activation conditions are fulfilled, triggering activation of the first set of one or more parameter values defined in the configuration profile for the one or more associated parameters.

In addition to the one or more activation conditions, in certain scenarios one or more extra conditions (not necessarily further activation conditions) need to be fulfilled for triggering activation of the first set of one or more parameter values. That is, fulfilment of the one or more activation conditions defined in the at least one configuration profile may in such scenarios not be sufficient for triggering activation of the first set of one or more parameter values.

The one or more activation conditions may pertain to a second set of one or more parameter values for one or more associated configuration parameters of the network element. The second parameter value set may be identical to or different from the first parameter value set. Additionally, or in the alternative, the one or more activation conditions may be defined via one or more status attributes of the network element, such as alarm conditions and so on.

As a further alternative, or in addition, the one or more activation conditions may relate to at least one of a network element type and a network element software version. In an example in which the one or more activation conditions relate to the network element software version, the configuration profile may be received prior to at least one of installation and activation of a network element software version update at the network element. As such, the one or one activation conditions may be an update of the network element to that particular software version.

In one implementation, the configuration profile is received as a configuration profile group comprising at least two configuration profiles. As such, two or more configuration profiles may be received together within the configuration profile group.

Each configuration profile group may be associated with one or more extra activation conditions that apply to each configuration profile in that configuration profile group. For example, activation conditions pertaining to all configuration profiles within a particular configuration profile group need not necessarily be included in each individual configuration profile but could be attributed to the "higher level" data structure, i.e., the configuration profile group. As such, the determination of whether or not the one or more activation conditions are fulfilled may be performed for both group-level activation conditions as well as for profile-level activation conditions, and only if the group-level activation conditions and the profile-level activation conditions for one particular configuration profile in the configuration profile group are fulfilled, activation of the corresponding first set of one or more parameter values is triggered.

Each configuration profile group may have a dedicated identifier for referencing or other purposes. The identifier may take the form of a configuration profile group name.

In certain cases, a configuration profile group may only comprise a single configuration profile, for example, for selectively monitoring or changing only a particular part of a network element configuration.

A configuration profile or configuration profile group may be packed together with a certificate or other credentials in a package to be transferred to the network element. With such a certificate or credentials, the right to use the configuration profile group by certain users may be defined. Such use of a configuration profile group may, for example, encompass the transfer of that group to one or more network elements for configuring same.

The configuration profiles in the configuration profile group may be mutually exclusive in regard to their associated activation conditions. As such, only one configuration profile within a particular configuration profile group may be active at a given point in time.

The configuration profiles in the configuration profile group may relate to at least one of different network element types and different network element software versions. For example, the configuration profiles in the configuration profile group may relate to collaborating network elements of different types. In such a case, the configuration profiles may define parameter values for one or more configuration parameters that are processed by the collaborating network elements in the context of their collaboration. Such an approach may ensure that configuration parameters are consistently processed throughout the communication network (e.g., by network elements collaborating in a sender/receiver context that is based on particular parameter values).

In certain variants, the activation of the one or more parameter values may only be triggered if an enablement command pertaining to the configuration profile or a configuration profile group comprising the configuration profile has previously been received. As an example, the determination of whether or not the one or more activation conditions are fulfilled may only be performed responsive to receipt of the enablement command. Receipt of the enablement command may thus be an extra condition that needs to be fulfilled for triggering activation of the first set of one or more parameter values.

The enablement command may be sent by a network management component in charge of the network element. The enablement command may include an identifier of the configuration profile or configuration profile group that is to be enabled for activation.

The method may further comprise one or more monitoring operations. As an example, after having triggered an activation of the one or more parameter values defined in the configuration profile, it may be monitored if one or more activation conditions defined in the configuration profile are (e.g., remain) fulfilled. If the one or more activation conditions defined in the configuration profile are not (e.g., no longer) fulfilled, one or more operations may be triggered. Such operations may comprise a deactivation of the one or more parameter values defined in the configuration profile, a transmission of a report message, and a change of a status attribute associated with the configuration profile or a configuration profile group comprising the configuration profile.

In an optional variant, the report message may include the status attribute or other information indicating that the one or more activation conditions defined in the configuration profile are not fulfilled. Deactivation of the one or more parameter values may comprise stopping the monitoring. Alternatively, or in addition, deactivation of the one or more parameter values may comprise returning to the parameter values that were previously in use (i.e., a re-setting operation).

In one implementation the method may further comprise receiving the enablement command. In such a case the enablement command may define the one or more operations triggered when the one or more activation conditions defined in the configuration profiles are not (e.g., no longer) fulfilled.

The method may further comprise activating the first set of one or more parameter values defined in the configuration profile for the one or more associated parameters. The activation may comprise a parameter value setting operation. For example, the first set of one or more parameter values may locally be set at the network element upon fulfilment of the one or more activation conditions. Alternatively, or in addition, the activation may comprise a parameter value monitoring operation.

The network element may further receive an instruction defining the applicable activation type. For example, the instruction may define that the first set of one or more parameter values is activated for the parameter monitoring operation only. Alternatively, the instruction may define that the first set of one or more parameter values is activated for the parameter setting operation followed by a parameter monitoring operation. The instruction may be received together (e.g., within) the configuration profile or a configuration profile group comprising the configuration profile. Alternatively, the instruction may be received in the enablement command or otherwise.

The monitoring operation may comprise monitoring, after having triggered an activation of the first set of one or more parameter values defined in the configuration profile, if the one or more parameters in the first set are observed. If the one or more parameter values are found to be not observed, one or more operations may be triggered. Such operations may comprise a deactivation of the one or more parameter values defined in the configuration profile, a transmission of a report message, and a change of a status attribute associated with the configuration profile or a configuration profile group comprising the configuration profile.

In an optional variant, the report message may include the status attribute or information indicating that the one or more parameter values are not observed. Deactivation of the one or more parameter values may comprise stopping the monitoring. Alternatively, or in addition, deactivation of the one or more parameter values may comprise returning to the parameter values that were previously in use (i.e., a re-setting operation).

The determining step may be performed or repeated in various situations. As an example, the determining step may be performed or repeated when a new object instance associated with the configuration profile or a configuration profile group comprising the configuration profile is created on a network element. Additionally, or in the alternative, the determining step may be performed or repeated when a parameter value changes at the network element. Such a parameter value change may in particular be performed or triggered by an operator or a user of the network element.

According to another aspect, a method of configuring a network element in a communication network is presented, wherein the method is performed by a network management component. The method comprises the step of storing at least one configuration profile. The configuration profile defines a set of one or more parameter values for one or more associated configuration parameters of the network element as well as one or more activation conditions for the set of one or more parameter values. The method further comprises the step of sending the configuration profile to at least one network element.

The configuration profile may be sent in a configuration profile group comprising two or more configuration profiles. Further optional details of the configuration profile group have already been described above.

The same configuration profile or configuration profile group may be sent to multiple network elements. As an example, the same configuration profile or configuration profile group may be sent to all network elements within a particular communication domain handled by the network management component.

The method performed by the network management component may further comprise sending a request message to the at least one network element to which the configuration profile has been sent. The request message may query a result of a monitoring at the network element with respect to one or more predefined scenarios. Such scenarios may include if the one or more parameter values defined in the configuration profile are observed, if the one or more activation conditions defined in the configuration profile are (e.g., remain) fulfilled, and an activation status pertaining to the configuration profile or a configuration profile group comprising the configuration profile. The activation status may indicate for a particular configuration profile or a particular configuration profile group whether or not an activation of the associated set of one or more parameter values has been triggered.

The method performed by the network management component may further comprise receiving, from the at least one network element, a report message indicative of at least one of an observation of the one or more parameter values defined in the configuration profile, a fulfilment of the one or more activation conditions defined in a configuration profile, and an activation status pertaining to the configuration profile or a configuration profile group comprising the configuration profile.

The network management component may send an enablement command to the at least one network element. The enablement command enables the configuration profile or a configuration profile group comprising the configuration profile at the at least one network element. Enablement of a configuration profile or a configuration profile group may be a prerequisite (i.e., an extra condition) for an activation thereof.

The network management component may process the configuration profile or configuration profile group comprising the configuration profile to define access rights. The processing may prevent a non-authorized enablement or use of the configuration profile. Generally, an authorization level necessary to enable or use the configuration profile or a configuration profile group comprising the configuration profile may be lower than the authorization level necessary to change a value of at least one configuration parameter defined in the configuration profile.

According to another aspect, a computer program product is presented. The computer program product comprises program code portions for performing the steps of any of the methods and method aspects described herein when executed on one or more processing devices (e.g., processors). The computer program product may be stored on a computer-readable recording medium such as a semiconductor memory, CD-ROM or DVD-ROM. The computer program product may also be provided for download via a communication connection.

According to another aspect, a network element for a communication network is provided. The network element comprises an Interface configured to receive at least one configuration profile. The configuration profile defines a first set of one or more parameter values for one or more associated configuration parameters of the network element and one or more activation conditions for the first set of one or more parameter values. The network element further comprises a processor configured to determine whether or not the one or more activation conditions are fulfilled, and, if the one or more activation conditions are fulfilled, to trigger activation of the first set of one or more parameter values defined in the configuration profile for the one or more associated parameters.

The network element may generally be configured to perform any of the steps of the any of the methods and method aspects presented herein.

Also provided is a network management component for configuring network elements of a communication network. The network management component comprises a memory storing at least one configuration profile. The configuration profile defines a set of one or more parameter values for one or more associated configuration parameters of a network element and one or more activation conditions for the set of one or more parameter values. The network management component further comprises an interface configured to send the configuration profile to at least one network element.

The network management component may be configured to perform the steps of any of the methods and method aspects presented herein.

Also provided is a communication network comprising the network management component presented herein and multiple network elements in accordance with the present disclosure.

### Brief Description of the Drawings

In the following, embodiments and exemplary aspects of the present disclosure will be described in more detail with reference to the drawings, in which:
- Fig. 1: illustrates an embodiment of a communication network with an embodiment of a network management component and one or more network element embodiments in accordance with the present disclosure;
- Figs. 2A and 2B: illustrate further embodiments of a network management component and a network element in accordance with the present disclosure;
- Fig. 2C: illustrates flow charts of a method embodiment performed by a network management component and a method embodiment performed by a network element in accordance with the present disclosure;
- Fig. 3: illustrates another embodiment of a communication network in accordance with the present disclosure;
- Fig. 4: is a schematic diagram of the concept a configuration profile group;
- Fig. 5: shows data structure embodiments for a configuration profile group;
- Fig. 6: is a signalling diagram in accordance with the present disclosure; and
- Figs. 7 to 9: are flow charts illustrating further method embodiments in accordance with the present disclosure; and

### Detailed Description

In the following description, for purposes of explanation and not limitation, specific details are set forth, such as particular network protocols and particular network elements, in order to provide a thorough understanding of the present disclosure. It will be apparent to one skilled in the art that the present disclosure may be practiced in other embodiments that depart from these particular details.

Those skilled in the art will further appreciate that the functions, steps and services described herein may be implemented using individual hardware circuitry, using software functioning in conjunction with a programmed processor or general purpose computer, using an Application Specific Integrated Circuit (ASIC), and/or using one or more Digital Signal Processors (DSPs). It will also be appreciated that while the present disclosure is primarily described in the context of methods and devices, it may also be embodied in one or more processors and one or more memories coupled to the one or more processors, wherein the one or more memories are encoded with one or more programs that, when executed on the one or more processors, perform the functions, steps and services disclosed herein.

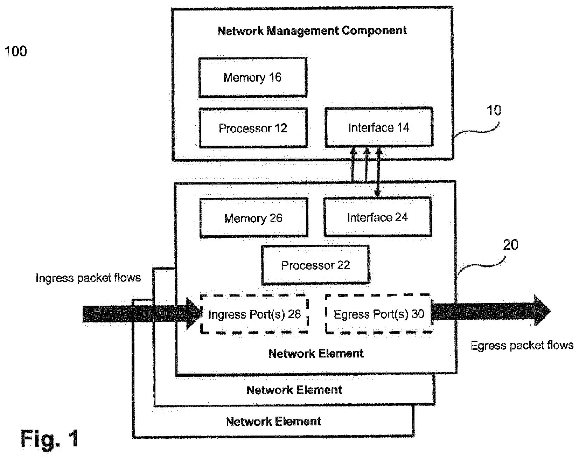

Fig. 1 illustrates an embodiment of some components of a communication network 100. As illustrated in Fig. 1, the communication network 100 comprises a network management component 10 as well as one or more network elements 20 in communication with the network management component 10. It will be appreciated that the communication network 100 comprises additional components not illustrated in Fig. 1.

The network management component 10 of Fig. 1 is adapted to configure the network elements 20 on the basis of configuration profiles and/or configuration profile groups. To this end, the network management component 10 comprises a processor 12 and an interface 14 configured to communicate with the one or more network elements 20. The network management component 10 further comprises a memory 16 with program code that, when executed by the processor 12, configures the network management component 10 to implement the methods and method aspects of the present disclosure. The memory 16 is further configured to store at least one configuration profile or configuration profile group as will be explained in more detail below.

In a similar manner, each network element 20 comprises a processor 22, an interface 24 and a memory 26. The interface 24 is configured for a communication with the network management component 10. The memory 26 stores program code that, when executed by the processor 22, configures the network element 20 to implement the methods and method aspects of the present disclosure. The memory 26 is further configured to store one or more configuration profiles or one or more configuration profile groups.

The network elements 20 can have different functions within the communication network 100. As an example, one or more of the network elements 20 may be configured as routers or switches having one or more ingress ports 28 and one or more egress ports 30. Each ingress port 28 is configured to receive one or more ingress packet flows, and each egress port 30 is configured to transmit one or more egress packet flows. The processor 22 is configured to perform ingress and egress processing operations as generally known in the art. It will be understood that a configuration of the network element 20 with one or more ingress ports 28 and one or more egress ports 30 is only illustrative and not intended to limit the functionalities thereof in any way.

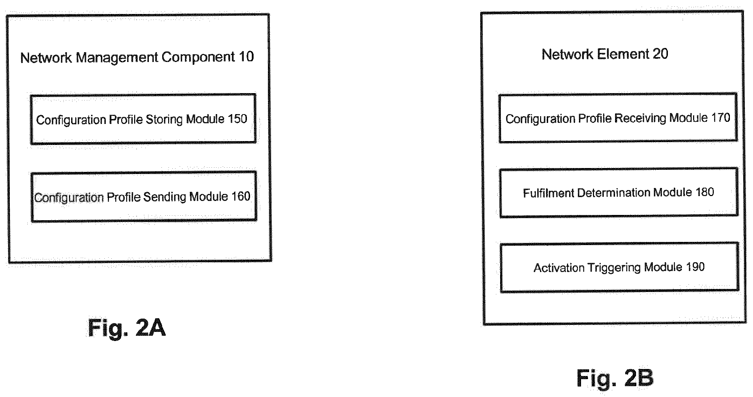

Figs. 2A and 2B show functional embodiments of the network management component 10 and the network element 20, respectively. These functional embodiments may be based on the structural embodiments discussed above with reference to Fig. 1.

As illustrated in Fig. 2A, the network management component 10 comprises a configuration profile storing module 150 as well as configuration profile sending module 160. The network element 20 comprises a configuration profile receiving module 170, a fulfilment determination module 180 as well as an activation triggering module 190. Each of the network management component 10 and the network element 20 may comprise one or more further modules as needed.

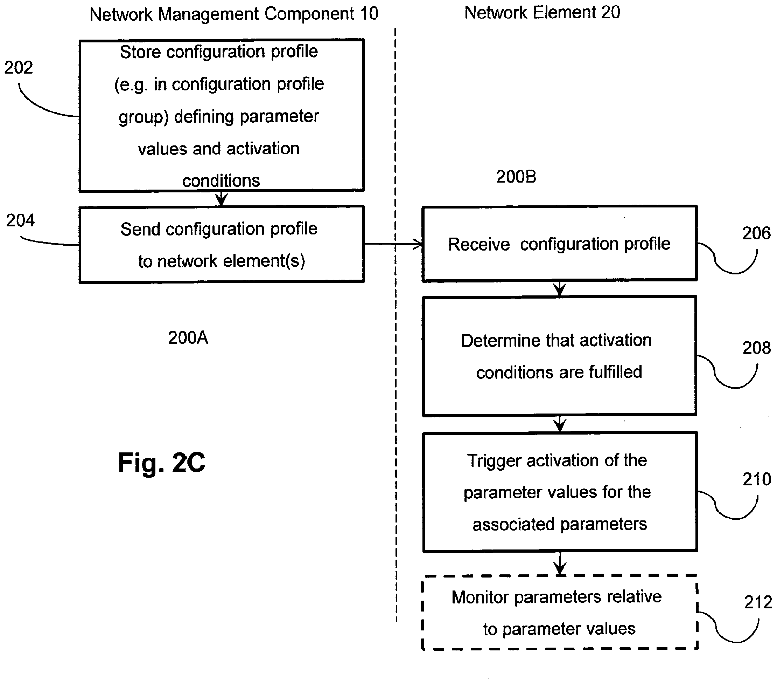

Fig. 2C illustrates in two flow charts 200A, 200B exemplary method embodiments performed by the network management component 10 and an individual network element 20, respectively. The network management component 10 and the individual network element 20 may be configured as explained above with reference to Figs. 1, 2A and 2B.

The method embodiments generally target at providing the network elements 20 in the communication network 100 (see Fig. 1) with conditional configuration profiles for applying configuration parameter settings. The scope of an individual configuration profile is the entire network element configuration and is in particular not limited to any standardized configuration parameter subsets. Rather, configuration profiles can flexibly and individually be defined and managed by network operators via the network management component 10. The same set of configuration profiles (that may be bundled in one or more configuration profile groups) can be downloaded to and installed on a larger set of network elements 20.

As shown in Fig. 2C, the method performed by the network management component 10 includes a step 202 of storing at least one configuration profile in memory 16 (see Fig. 1). The at least one configuration profile defines a set of one or more parameter values for one or more associated configuration parameters of the network element 20 as well as one or more activation conditions for the set of one or more parameter values. Each configuration profile may belong to a configuration profile group optionally including one or more further configuration profiles. The configuration profiles within one configuration profile group will typically be mutually exclusive relative to each other (e.g., in terms of targeting at different network element types or different network element software versions).

The configuration profiles and configuration profile groups stored on the network element component 10 may have been defined by an operator prior to step 202. Each configuration profile or configuration profile group may be packed together with a certificate or any other credentials for authentication purposes in an individual package. Moreover, each configuration profile or configuration profile group may be processed by the network element component 10 to prevent a non-authorized handling (e.g., modification or use) thereof.

In step 204, the processor 12 of the network management component reads a particular configuration profile or configuration profile group from memory 16 and sends it to the one or more of the network elements 20. The sending step 204 is performed via the interface 14 of the network management component 10.

Referring now to the method embodiment performed by the network element 20, the at least one configuration profile (e.g., within a configuration profile group) is received in step 206 via the interface 24 and then forwarded to the processor 22 for further processing and/or stored in the memory 26.

In a further step 208, the network element 20 determines whether or not the one or more activation conditions for one particular configuration profile are fulfilled. Step 208 could immediately follow step 206. Alternatively, step 208 may conditionally be performed upon receipt of an enablement command for an individual configuration profile or configuration profile group. To this end, each configuration profile or configuration profile group may include an identifier that permits referencing of this configuration profile or configuration profile group in the enablement command. The enablement command may be sent by the network management component 10 independently of step 204. For example, the enablement command for a particular configuration profile or configuration profile group may be sent separately after the configuration profile or configuration profile group has been sent in step 204.

Therefore, in the determining step 208 one or more extra conditions (such as receipt of an enablement command) in addition to the activation conditions specified in a particular configuration profile may be evaluated. Further activation conditions may be specified on a configuration profile group level or otherwise.

If it can be determined in step 208 that the one or more activation conditions (plus, if defined, one or more extra conditions) are fulfilled, the method proceeds to step 210. In step 210 activation of the set of one or more parameter values defined in the particular configuration profile for the one or more associated parameters is triggered. Activation of a parameter value set may comprise locally setting the parameter value set at the network element 20. Additionally, or in the alternative, the parameter value set provided in the configuration profile may be activated for being monitored as indicated In step 212. The monitoring in step 212 may relate to the parameters that have previously been set or to any other parameters.

The approach presented herein permits an operator of the network management component 10 to decide about the parts of a network element configuration that should be managed using conditional configuration profiles. In particular, the approach presented herein is not restricted to standardized subsets of configuration parameters.

Moreover, the approach permits an automatic deployment of configuration profiles. In particular, configuration parameters pertaining to new features not yet available within the communication network 100 can be automatically deployed. To this end, an operator can prepare the network elements 20 for a software update by defining one or more software version-specific configuration profiles. These configuration profiles may be downloaded in advance (i.e., prior to installation or activation of a software version update) and can then automatically be activated once the network element 20 is upgraded to the new software version by appropriately defining the activation condition(s). As such, the approach presented herein permits to provide a network element 20 in advance with a configuration profile that includes configuration parameter settings for new features that only become available upon an upcoming software version update of the network element 20.

Further, for network elements 20 with many instances of the same type of a particular configuration object, the configuration parameters can be designed to apply conditionally per network element type. As an example, for a Radio Network Controller (RNC), a configuration profile can be tailored to only be applicable to small radio cells, or only to radio cells of specific importance or category. Different configuration profiles may thus be tailored to a required level of performance monitoring based on suitably selected activation conditions (e.g., if the operator has chosen to categorize a cell in a specific way or if the cell is marked by a parameter as important or not at the moment). As another example, the activation conditions can be defined such that different transport bearers can be given different properties depending on, for example, one or more of a time of day, an amount of payload, and so on.

A configuration profile or a configuration profile group may also be packaged with suitable credentials for delegating trust. For example, certain configuration parameter changes may require the changing of parameters with potentially costly side effects (e.g., of parameters that may have been classified as only accessible by expert operators). A set of such configuration parameters can be sealed in a configuration profile, or a set of such configuration profiles may be sealed in a configuration profile group, that may be signed or that may otherwise be selectively enabled by an authorized user. Since the resulting configuration profile or configuration profile group only contains "safe" combinations of settings of configuration parameter values, the right to use and apply the configuration profile or configuration profiles group can be granted to normal users. Such a packaging of configuration profiles or configuration profile groups will thus empower the normal user in a controlled and predictable way.

The approach presented herein also permits the configuration of collaborating network elements 20 of different types. As an example, a configuration profile group may contain two versions of the same configuration profile, where one version is targeting at an instance of one type of network element 20 and the other version is targeting at an instance of another network element type. Upon fulfilment of the activation conditions of a particular configuration profile, the correct version of the configuration profile will thus become active on the targeted network element type, and potentially at the same time at all collaborating network element types. As an example, a "small cell" configuration profile for a Radio Base Station (RBS) can be used to configure only a minimum of performance or alarm data to be sent from the corresponding network element 20, and the corresponding configuration profile for an OSS or NMS system 10 can be used to turn off or reduce the expectance of amounts of performance or alarm data.

The present disclosure additionally permits an efficient network-level configuration processing by the network management component 10 or another auditing component. The auditing can be performed by monitoring the state (e.g., the activation status or any other status parameter or attribute) of the configuration profiles or configuration profile groups on each network element. By monitoring only the state of the configuration profiles or configuration profile groups, rather than the individual configuration parameters, the network management component 10 (e.g., an OSS or, via the Itf-N interface, the NMS) will immediately be informed of any network element 20 that violates any part of any of its activated configuration profiles. It can optionally also be determined if a current activation of a configuration profile is the result of a manual override of its activation conditions.

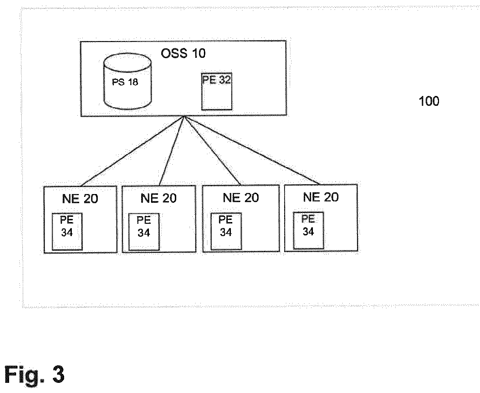

Fig. 3 illustrates another embodiment of a communication network 100 that may be based on the embodiment discussed above with reference to Figs. 1 and 2. In the embodiment illustrated in Fig. 3, the network management component takes the form of an OSS 10 (or NMS) that is connected to a large number of network elements 20.

The OSS 10 comprises a profile store 18 storing predefined configuration profile groups and configuration profiles. The profile store 18 may be realized within a memory of the OSS 10 (see reference numeral 16 in Fig. 1 and the reference sign 18 in Fig. 3).

The OSS 10 further comprises a profile engine 32 that permits the management of configuration profile groups and configuration profiles in the profile store 18, including the generation of new configuration profile groups and configuration profiles. The profile engine 32 further permits the selective download of configuration profiles and configuration profile groups from the profile store 18 to the network elements 20 and the enablement of downloaded configuration profile groups and configuration profiles via enablement commands sent to the network elements 20. The profile engine 32 may be realized by a combination of the processor 12 and program code in memory 16 (see Fig. 1).

An expert OSS operator may be responsible for defining and maintaining the configuration profile groups and configuration profiles in the profile store 20. Usage of these configuration profile groups and configuration profiles may be delegated by the expert OSS operator to other operators as explained above. Such usage may comprise the download of individual configuration profile groups and configuration profiles to the network elements 20 or the transmission of enablement commands for individual configuration profiles and configuration profile groups to the network elements 20.

Each network element 20 likewise comprises a profile engine 34. Each profile engine 34 may be realized by a combination of the processor 22 and program code stored in the memory 26 of the network element 20 as illustrated in Fig. 1.

The profile engine 34 of a network element 20 is responsible for storing downloaded read-only copies of configuration profile groups and configuration profiles. Each profile engine 34 may further be configured to evaluate activation conditions for configuration profiles and to activate the parameter values of a particular configuration profile in case the associated activation conditions are fulfilled. Parameter value activation may comprise setting the configuration parameter values defined in the configuration profile and/or monitoring these parameter values.

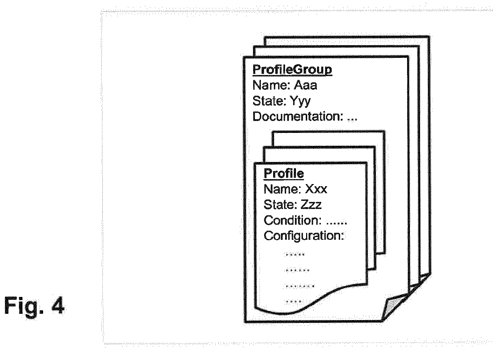

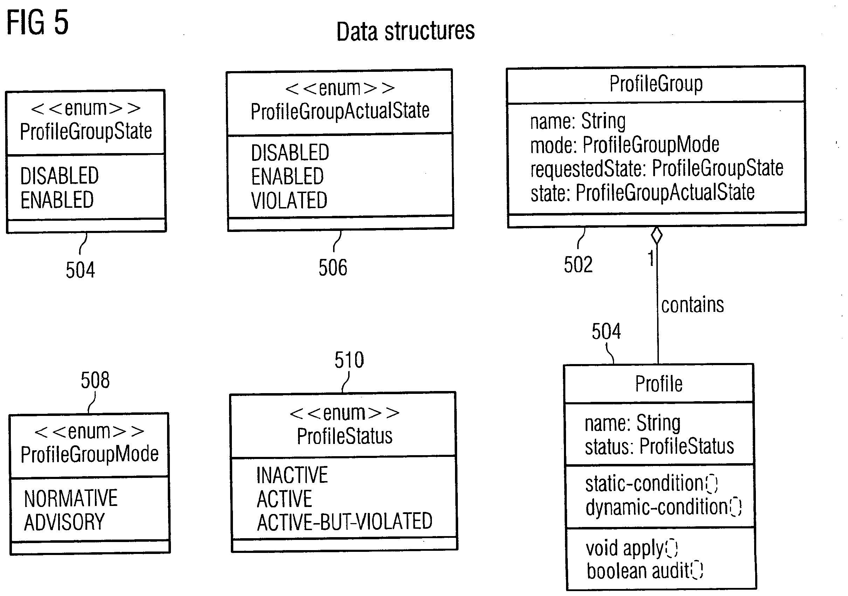

Figs. 4 and 5 illustrate details of configuration profile groups and configuration profiles.

Generally, a configuration profile is a description of a set of configuration parameters and the values these parameters should have in order for a network element 20 (including a logical or physical part of a network element, such as a radio cell, communication port, antenna unit or IP-sec tunnel) to conform to the configuration profile. Such parameters may also have default values declared, such as dedicated values to be used when a network element 20 is created and the operator does not provide a specific value for a particular parameter. A configuration profile may optionally also contain alternative default values to be used if the network element 20 is created while the configuration profile is active.

As shown in Figs. 4 and 5, each configuration profile group (data structure 502 in Fig. 5) contains one or more configuration profiles (see data structure 504 in Fig. 5). A configuration profile group has a name and a state. In more detail, a configuration profile group has a requested state (see data structure 504 in Fig. 5) that can either be "disabled" or "enabled". Each configuration profile group also has an actual state, which can additionally be "violated" (see data structure 506 in Fig. 5). The transmission of enablement and optional disablement commands from the network management component 10 to an individual network element 20 can change the requested state of a particular configuration profile group. As an example, an enablement command will set the requested state to "enabled", while a disablement command will set the requested state to "disabled". As will be explained in more detail below, the actual state of a configuration profile group could also be "violated".

Each configuration profile group further has a dedicated mode. As illustrated by data structure 508 in Fig. 5, the mode can either be "normative" or "advisory". In normative mode, and upon fulfilment of an activation condition for a configuration profile belonging to a particular configuration profile group, the associated parameter values are first set and then the corresponding parameter value settings are monitored. In advisory mode, on the other hand, the parameter values defined in the particular configuration profile are only monitored with regard to the actual (i.e., currently prevailing) valves of these parameters.

Again referring to Figs. 4 and 5, each configuration profile also has a name (i.e., identifier) and an activation status. As indicated by data structure 510 in Fig. 5, the activation status of a configuration profile may be one of "inactive", "active", and "active-but-violated". In the inactive status of a particular configuration profile, the associated activation conditions are not fulfilled. In the active status of a configuration profile, the associated activation conditions are fulfilled and the associated parameter value set has been activated. The active-but-violated status corresponds to the active status in which a monitoring has yielded that one or more of the parameter values defined in the configuration profile are violated.

As also shown in Figs. 4 and 5, a configuration profile also specifies one or more activation conditions. In accordance with data structure 504 of Fig. 5, the activation conditions may comprise one or more static activation conditions and/or one or more dynamic activation conditions.

Static activation conditions may, for example, describe for what network element type and/or for what software version(s) of such a network element type the corresponding configuration profile is applicable. Static activation conditions typically only need to be evaluated once at first start after a software version update (since they only test static properties related for a particular software release and for a particular network element type).

Dynamic activation conditions are evaluated in the context of the information available during operation of a particular network element 20. Examples of such information include, but are not limited to, configuration data, state data, performance management data, alarm conditions, and so on. The dynamic activation conditions can typically only be evaluated within the scope of a particular configuration profile.

Still referring to Figs. 4 and 5, each configuration profile additionally defines the configuration parameters with the associated configuration parameter values that are to be activated (or "applied" in the terminology of the data structure 504 of Fig. 5). As explained above, the configuration parameter values defining the "configuration" of a particular configuration profile can be activated in various ways in terms of setting and/or monitoring the corresponding parameter values. The concrete activation "type" may be indicated by the configuration profile group mode which, as explained above, could be "normative" or "advisory".

The scope of a configuration profile may be a single MO Instance or a small set of closely-related MO Instances that the configuration profile will operate on. As explained above, the configuration profile can be activated to implement a parameter value setting operation and/or a parameter value monitoring operation. In case the one or more activation conditions defined for a particular configuration profile are fulfilled for one such scope, the configuration profile will be active within that scope. If the one or more activation conditions are valid for several such scopes, the configuration profile will be active in all these scopes independently of each other. The central MO class in a scope is sometimes also referred to as the controlling MOC or controlling configuration object type.

As an example, a network element 20 may have three instances of a MOC called Cell. There can be two different configuration profiles A and B targeting Cell objects (where the scope of these configuration profiles is a single instance of the MOC Cell). In this example, the dynamic activation conditions for configuration profile A will be fulfilled by two of the Cell instances and the dynamic activation conditions of configuration profile B will be fulfilled by a third instance of Cell. Hence, two of the Cell instances will be subjected to a parameter value setting operation and/or a parameter value monitoring operation under control of configuration profile A, and the third will be subjected to a parameter value setting operation and/or a parameter value monitoring operation under control of configuration profile B. Both configuration profiles A and B can therefore be active at the same time, but on different parts of the configuration. As a simplification, one may say that configuration profiles A and B will have the same scope, namely the MOC Cell.

The action part of a configuration profile describes the parameter value or values to use (i.e., to activate) for a configuration object. The statements in the action part can be declarative in the sense that they are used both for assigning values to the configuration and to monitor the configuration compared to these values.

The action part can also create new configuration objects for monitoring existence of particular object instances as long as the identifier for addressing the object is fixed or can be calculated in runtime based on other information. Correspondingly, it is also possible to delete configuration objects and monitor the absence of such objects.

The parameters (e.g., attributes) of configuration objects may have default values specified for the convenience of the operator. The configuration object can thus be created, but values must only be submitted for parameters that do not have default values for parameters or where the default values specified by the software of the network element are not sufficient.

A configuration profile can be used to supply customer-specific default values to use at object creation, overriding the system default values provided by the software of the network element. These alternatives default values are then only used at object creation time, using the presently active and applicable configuration profile.

A configuration profile group as shown in Figs. 4 and 5 can thus be considered a named set of configuration profiles that can have the same scope, but different conditions. For any particular configuration item (e.g., MOC Instance) and point in time, only one of the configuration profiles in a configuration profile group should be active. If the definition of the configuration profiles within one configuration profile group is such that two configuration profiles (can) become active at the same time for the same object, the configuration profile group is considered inconsistent and can be marked as faulty. The purpose of packaging configuration profiles into a configuration profile group may be to specify the mutual exclusion relation between the configuration profiles.

As an example, configuration profiles in different configuration profile groups G1 and G2 may well operate on the same MO Instances, but are expected to operate on different parts of these MO Instances to control different aspects of these MO Instances. Thus, one configuration profile can configure (via a parameter value setting operation) and monitor the output power values for a MO Cell, whereas another configuration profile has the role of tuning certain threshold values for the Cell objects.

In one embodiment, the configuration profile group can be used to store two versions of a configuration profile, one to use for instances of a network element 20 executing software of version N, and the other targeting at the same network element instances when executing software of version N+1. By distributing such a configuration profile group to all instances of this network element type before rolling out a new software version in the communication network 100, the operator can prepare for the update and ensure that all network elements 20 will be able to activate the same configuration profile immediately when restarting with a new software version (even if the configuration mechanism for the network element 20 has changed due to the new software, for example in terms of what parameters or parameter values to use). No additional Configuration Management (CM) actions will be required.

In a further embodiment in which the configuration profile group comprises two configuration profiles for software version N and software version N+1, the configuration profile for software version N+1 may be extended to also handle a new functionality added to the network element 20 as a result of the software version update. As an example, the configuration profile for software version N+1 may defined a parameter value for a parameter newly introduced with the new functionality.

In a still further embodiment, the operator may use the configuration profiles 20 in a configuration profile group to ensure that two collaborating network elements 20 of types A and B have a consistent configuration. This can, for example, be achieved by including two versions of a configuration profile into the configuration profile group, one targeting at a network element 20 of type A and the other targeting at a network element 20 of type B. An example of such an approach includes, but is not limited to, a configuration profile instructing a network element 20 of type A to only propagate state information to an OSS 10 (which constitutes the network element of type B) at regular but longer than normal intervals. Consequently, the OSS 10 should only expect information from the network element 20 at longer than normal intervals. Yet another example is a configuration profile instructing an RNC node (i.e., a network element 20 used for controlling a large set of Radio Base Stations, RBSs, in a 3G network) to configure radio cells of a certain type to operate in a mode that would normally result in the RBS node issuing an alarm, and, correspondingly, configure the effected RBS nodes to lower the threshold when such an alarm should be issued.

As explained above, in some embodiments a configuration profile group downloaded to a network element 20 has to be enabled before the activation conditions associated with the individual configuration profiles can be assessed with respect to their fulfilment. A configuration profile group can be enabled by sending an enablement command referencing the particular configuration profile group (e.g., via its name or other identifier) from the network management component 10 to the one or more network elements of interest. As a default, all configuration profiles within a newly enabled configuration profile group will be or become inactive.

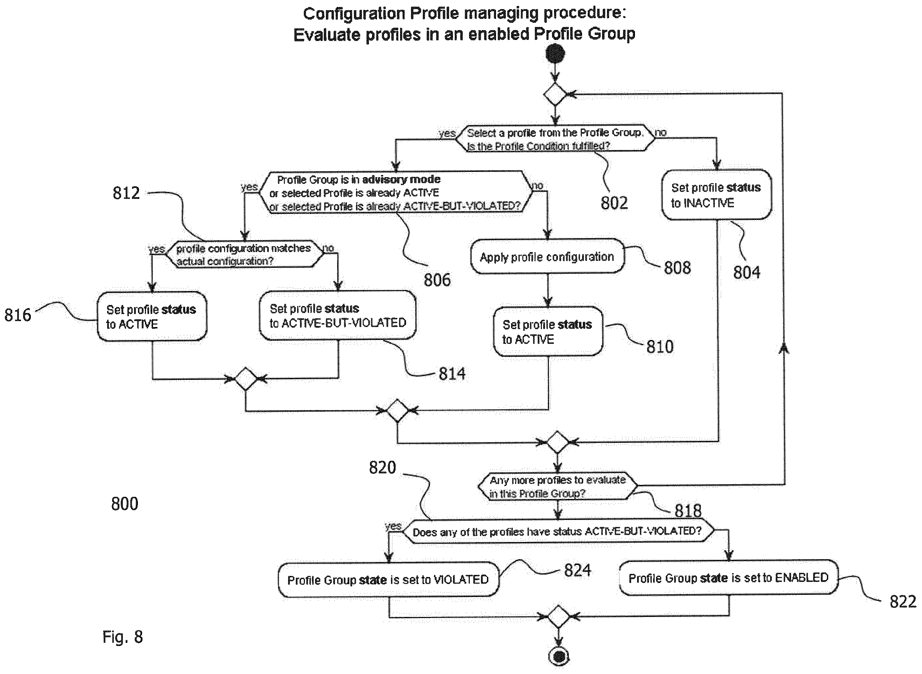

As explained above with reference to data structure 508 in Fig. 5, a user enabling a configuration profile group via the network management component 10 can chose between enabling the configuration profile group in either a so-called normative mode or a so-called advisory mode. When a configuration profile group becomes enabled in the normative mode, the profile engine 34 of the network element 20 will evaluate the one or more activation conditions of each configuration profile for each configuration object instance of the controlling configuration object type and mark the configuration profile as active or inactive per instance (see data structure 510 in Fig. 5). For each time a configuration profile switches from an activation status "inactive" to "active" for an instance, the status of the configuration profile is updated accordingly and the configuration parameter value setting of the configuration profile is applied to the configuration object. This procedure will be discussed in more detail below in a simplified form with respect to Fig. 8 (where there exists only one instance of the controlling configuration object type).

If the configuration profile is enabled in the advisory mode, the configuration profile will not change any existing configuration parameter settings. Rather, it will perform a configuration parameter monitoring operation with respect to the configuration parameter values indicated in the configuration profile. A status flag or other status parameter of the configuration profile group will be set to indicate if the object or objects in its scope are configured in regard of their parameter values as described in the configuration profile or if they violate the configuration profile. As such, the activation status of a configuration profile can be one of inactive, active and active-but-violated (see data structure 510 in Fig. 5). The state of a configuration profile group shows the aggregated view of the activation states of all its configuration profiles (see data structure 506 in Fig. 5).

As soon as a configuration profile is active for a configuration object instance at a network element 20, the profile engine 34 at the network element 10 will monitor modifications of the parameters of that Instance and compare any new parameter values with (a) the one or more activation conditions of the configuration profile and (b) the configuration parameter values defined in the configuration profile. In this regard, three scenarios can happen.

First, it may be found that the modifications do not impact the activation condition of the configuration profile, nor are any configuration parameter values of the configuration profile changed. In this case, nothing will happen with respect to the configuration profile.

Second, the modifications may alter a configuration parameter value set by the configuration profile to a value that does not conform to the configuration profile. In this case, the object instance does no longer conform to the configuration profile and the activation status of the configuration profile is updated to "active-but-violated" to reflect this situation. No attempt to "correct" the configuration is made.

Third, the modification may change the network element configuration such that the one or more activation conditions of the configuration profile are no longer fulfilled. In such a case the profile engine 34 will not alter or reset the parameter values of the previous object instance, but if the configuration profile is now active for a new object instance, the normal steps of activating the configuration profile for that object instance will be taken.

In order to correct a configuration object instance that is violating an active configuration profile, the configuration profile must be re-activated on that instance by the operator.

In the following, the management of configuration profiles and configuration profile groups, including the delegation of authorization, will be described in more detail.

In general, a configuration profile or a configuration profile group will be processed on the network management component 10 to prevent a non-authorized enablement or use thereof. In certain variants, an authorization level (e.g., "ordinary operator") to enable or use a configuration profile of configuration profile group may be lower than the authorization level (e.g., "expert operator") necessary to change the value of at least one configuration parameter defined in the configuration profile or configuration profile group.

As explained above with reference to Fig. 3, a configuration profile group is created, edited, and stored in a profile store 18 inside an OSS 10 or other network management component. If target-based access control is deployed on the network element type targeted at by a configuration profile group, the profile store 18 will require the same set of access rights for creating configuration profiles operating on restricted parameters as the network element 20 would require if the corresponding CM change were to be done on the network element 20. An expert operator with knowledge and authority to perform the intended configuration parameter changes may thus create, test and digitally sign the configuration profile group, thereby preventing any unauthorized personal to alter the configuration profile group.

The expert operator in certain cases may also include into the configuration profile group the required permissions (credentials) for an ordinary operator to use the configuration profile group (e.g., to enable the configuration profile group or to activate or switch between configuration profiles within the configuration profile group). As such, the expert operator has the possibility to provide specially designed alternative configurations packaged in a form that can be read and understood but not altered, ready for the ordinary operator to use. When such a configuration profile is applied, it will be the permissions of the signing author of the configuration profile group that are used to grant access to the parameters, not the access rights of the ordinary operator. As an alternative to assigning the same rights of usage to the entire configuration profile group, the expert operator may assign different access rights to different configuration profiles within the configuration profile group. In this way, as slightly wider group of operators may be allowed to apply one or a few special configuration profiles within a configuration profile group. On the other hand, all ordinary operators will only have the possibility to apply a default or reset type of configuration profile within the configuration profile group.

Now, the creation of a new object instance under control of a configuration profile will be explained.

When an operator reconfigures a network element 20 by creating a new object instance, the operator will provide values for selected parameters (e.g., attributes) of that object instance. At some point in the process of the actual object creation, the network element 20 will look-up the specification of this object type and the additional parameter values to the object according to the default values described in that specification.

Using the technique presented herein, the network element 20 may complement this process with an extra step. That is, it will request its local profile engine 34 to search for a configuration profile in any of the enabled configuration profile groups that will become active for this object under creation (once the object is actually created). In case such a configuration profile is found, default values defined in that configuration profile will be used for any of the parameters that have not yet received a (default) value. As a final step, the network element 29 will look for the "original" default values for any parameter that has not received a value.

The mechanism of using configuration profiles to permit the use of operator-provided conditional default values will allow an operator to specify alternative and context-dependent default values compared with the values provided by a vendor of the node underlying the element.

In the following, CM changes and status parameter changes effecting a network element configuration under configuration profile control will be explained.

During normal operation of a network element, there are several reasons why a parameter can change its value. First, the parameter may represent some status of a network element (e.g., a TCP/IP connection being overloaded) or a measurement in the network element (e.g., a peak packet loss rate measured for some small time window), and this status or measurement is now updated by the node (so that the value of the previous status or the previous measurement is changed).

Second, the parameter may hold a value set by the operator and used to control some aspect of the network element functionality (e.g., the number of time windows to use for the status parameter in the example above, or the maximum output power to use for a radio cell), and the operator may have changed that value.

Third, the parameter may hold a value set by the operator but normally not used by the network element 20. The parameter may be provided for allow the operator to augment the network element configuration with operator-specific data to be used in the management of the network element 20. Examples of such configuration parameters are the 3GPP-specified "user label" attributes, and the attributes "importance" and "category" proposed by 3GPP. While the software of a network element 20 can implement functionality that uses these parameters, their primary purpose is to act as marking parameters that the operator can use to augment the network element configuration for his own purposes. The parameter value may thus change upon operator interaction, or by an algorithm executed in the operators' management system having updated the value.

In addition to the three examples explained above, there may of course exist other scenarios in which a parameter value changes.

As soon as any parameter value is to be changed, the regular functionality of the network element 20 to execute the change will operate as usual. If a transactional behaviour is included (allowing multiple changes to be executed for closing the transaction and thereby activating these changes), the transaction should be committed as normal. At that point, when the change takes effect, the profile engine 34 is requested to re-validate its enabled configuration profile groups. The profile engine 34 will then re-evaluate the activation conditions in each configuration profile in these enabled configuration profile groups and will act accordingly.

If a configuration profile that was previously active for this particular configuration item no longer has its one or more activation conditions fulfilled, it will be marked as inactive for this configuration item. No other action is taken. In particular, no parameter values are changed as a result of this process.

If a configuration profile that was previously active for the particular configuration item continues to be active, then its actions are examined. If the actions do not match the now present configuration, then the configuration profile is marked as "active-but-violated". Otherwise, it continues to be marked as "active".

If a configuration profile that was previously inactive for the particular configuration item now becomes active (because its one or more activation conditions are now fulfilled), its actions are executed. As a result, certain configuration parameters may become updated with new values. This update is separate from the update initiated by the operator (that led to the parameter value change), but happens as a consequence of the initial update.

As such, the configuration profile mechanism presented herein can be used to apply and monitor different parameter value settings for different groups of configuration items, all controlled by one or a few marking parameters. By changing a single marking parameter value, a different configuration profile can be applied, such as a different radio configuration profile, a different performance monitoring configuration profile (specifying what statistics to collect and produce for a particular cell) or a different Automatic Neighbor Relation (ANR) configuration profile (specifying how the ANR function operates). As a more specific example, changing the "category" of a radio cell object to "indoor-closed-shop" can be used to minimize the operation and power consumption of radio cell without shutting it down in total. Thereby, energy can be saved while keeping some connectivity for any staff remaining in the building. In this way, configuration profiles within a particular configuration profile group may be tailored to become automatically activated upon a value change of a predefined marked parameter.

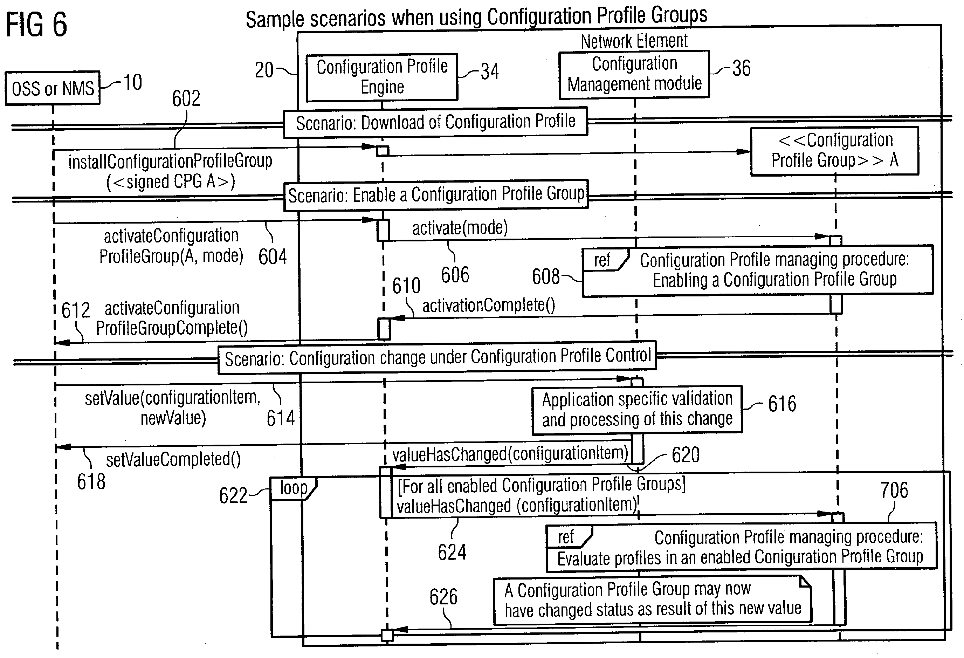

In the following, aspects of the previously described embodiments and additional aspects of the present disclosure will be described with reference to the signalling diagram illustrated in Fig. 6. Fig. 6 shows the signalling between a network management component 10 (e.g., OSS or NMS) and a network element 20. The network element 20 comprises profile engine 34 as explained above and, additionally, a configuration management module 36. The configuration management module 36 may be in charge of acting on parameter changes as explained above.

In more detail, Fig. 6 Illustrates three different scenarios, namely the download of a configuration profile from the network management component 10 to the network element 20, the enablement of a downloaded configuration profile group at the network element 20, as well as configuration changes under configuration profile control.

The upper signalling scenario in Fig. 6 illustrates the download of a configuration profile from the network management component 10 to the network element 20. Specifically, the network management component 10 uses an install message in step 602 to download onto the network element 20 a particular configuration profile having the name, or identifier, A. The install message is received by the profile engine 34, and the profile engine 34 will store the configuration profile group received with the install message in the profile store 18 (not shown in Fig. 6).

As explained above, the configuration profile group can be signed or protected. The signature may be used for authenticating the downloaded configuration profile group. Moreover, also one or more authorizations may be defined.

The signalling scenario in the central part of Fig. 6 illustrates the enablement of a configuration profile group that has previously been downloaded onto the network element 20.

Specifically, in signalling step 604 an enablement message (i.e., an enablement command) is transmitted from the network management component 10 to the profile engine 34 of the network element 20. The enablement message specifies the name, or identifier, A of the configuration profile group to be enabled and, optionally, the mode in which the configuration profile group is to be enabled (i.e., "normative" or "advisory"). The profile engine 34 in step 606 changes the requested state of the particular configuration profile group in the profile store 18 in accordance with the indicated mode. Step 606 triggers a configuration profile management procedure 608. Once the procedure 608 has been completed, in step 610 an enablement complete message is sent to the profile engine 34, and the profile engine 34 in step 612 notifies the network management component 10 thereof.

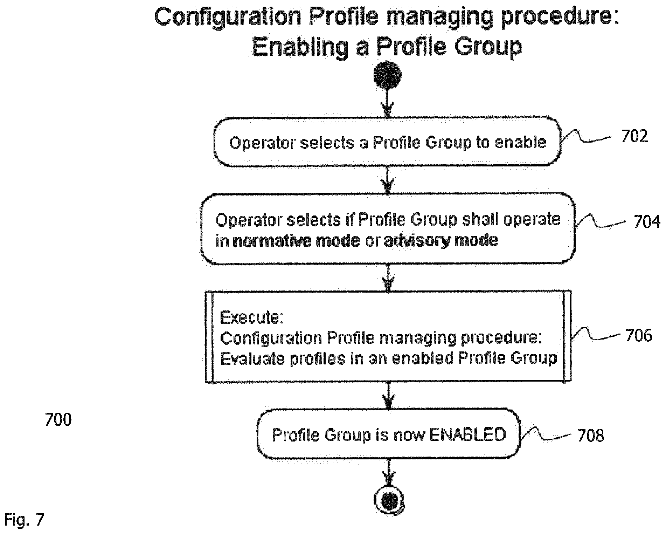

Fig. 7 illustrates in a flow chart 700 the enablement of a configuration profile group. In step 702, an operator of the network management component 10 selects a configuration profile group to enable. In a further step 704, the operator selects if the configuration profile group should operate in normative mode or advisory mode. In step 706 of Fig. 7 the configuration profile managing procedure is executed (following the steps 604 and 606 illustrated in Fig. 6). In step 708 of Fig. 7 the network management component 10 marks the particular configuration profile group as enabled (following the steps 610 and 612 in Fig. 6).

Details of the configuration profile management procedure (see reference numerals 608 in Fig. 6 and 706 in Fig. 7) are illustrated in flow chart 800 of Fig. 8.

As shown in Fig. 8, upon enablement of a particular configuration profile group, initially a profile from that configuration profile group is selected in step 802 and it is determined if the one or more activation conditions for a selected configuration profile are fulfilled. If this is not the case, the activation status of the configuration profile is set to "inactive" in step 804.

Otherwise, that means if the one or more activation conditions for the selected configuration profile are fulfilled, it is determined in step 806 if the configuration profile group is in the advisory mode or if the selected configuration profile is already in the status "active" or if the selected configuration profile is already in the status "active-but-violated". If none of these three conditions is fulfilled, the profile configuration is applied in step 808. In other words, the parameter values defined in the selected configuration profile are set and/or monitored. Then, in step 810, the activation status of the configuration profile is set to "active".

If, on the other hand, it is determined in step 806 that at least one of the tested conditions is fulfilled, it is determined in step 812 whether or not the currently prevailing parameter values match the particular parameter values defined in the selected configuration profile. In case there is no match, the activation status of the configuration profile is set to "active-but-violated" in step 814. Alternatively, in case of a match, the activation status of the configuration profile is set in step 816 to "active" (or simply remains "active").

From either one of steps 810, 814 and 816, the method proceeds to step 818. In step 818 it is determined if the presently processed configuration profile group comprises any additional configuration profiles. Should this be the case, the method loops back to step 802. Otherwise, the method continues with step 820.

In step 820 it is determined whether any of the profiles in the configuration profile group has the activation status "active-but-violated". If this is not the case, the state of the configuration profile group is set to "enabled" in step 822. Otherwise, the state of the configuration profile group is set to "violated" in step 824. At this point, the configuration profile managing procedure illustrated in Fig. 8 ends. In an optional further step, the current state of the configuration profile group may be communicated, for example together with confirmation steps 610, 612 illustrated in Fig. 6, to the network management component 10.

Returning to Fig. 6, in the lower part the handling of a configuration change at the network element 20 under control of the configuration profile concept presented herein is shown.

Specifically, in step 614, the network management component 10 sends a "set value" message to the configuration management module 36 in the network element 20. The message is directed at setting a new value for a particular configuration item (e.g., a particular configuration parameter). Of course, the value of a configuration item could also change without interaction from the network management component 10. Also in this case, the procedure shown in the lower part of Fig. 6 may be initiated. Moreover, that procedure could also be initiated autonomously by the network element 20 at predefined time intervals. In the following, it will however be assumed that the configuration change is initiated by a message sent in step 614 by the network management component 10.

In response to receipt of the message by the configuration management module 36, the configuration management module 36 performs application specific validation and processing of the requested change in step 616. Once the new value has been set, this is confirmed in step 618 to the network management component 10. Additionally, in step 620, a loop 622 is started for all currently enabled configuration profile groups. To this end, the new value of the at least one configuration item is sent to the profile store 18 (step 624) and the configuration profile management procedure (i.e., step 706 in Fig. 7 and as illustrated in Fig. 8) is repeated for each individual configuration profile group having the state "enabled". As a result of the configuration profile managing procedure, one or more configuration profile groups may now have a new state, which may be communicated to the profile engine 34 in step 626 of Fig. 6.

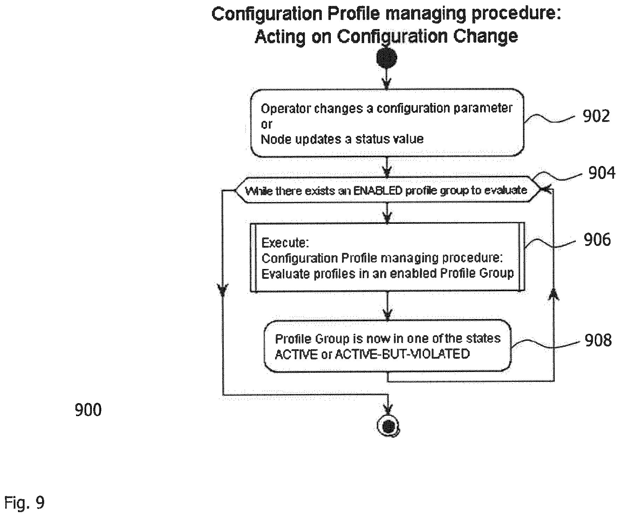

Fig. 9 summarizes an exemplary configuration change scenario in a flow chart 900.

In an initial step 902, an operator may change a configuration parameter value. Alternatively, the network element 20 autonomously changes the configuration parameter value (e.g., updates a status parameter).

It is then checked in step 904 whether there exists a configuration profile group in the "enabled" state to be evaluated. If there is no enabled configuration profile group, the procedure ends. Otherwise, the configuration profile managing procedure in accordance with step 706 of Fig. 7 (see also Fig. 8, denoted as step 906 in Fig. 9) is executed. As a result of the configuration profile managing procedure in step 706, each enabled configuration profile group is now in the activation status "active" or "active-but-violated", see step 908.

Any of the notifications from the network element 20 to the network management component 10 in Fig. 6 may be performed using Attribute Value Change (AVC) notifications as defined in 3GPP Technical Standard 32.662. As such, the propagation of such information to the network management component 10 can be automated.

As has become apparent from the above description of exemplary embodiments, the present disclosure introduces conditional configuration profiles that permit efficient configuration parameter value monitoring operations (i.e., auditing) as well as configuration parameter value setting operations. The configuration profile may cover all or a certain part of a network element configuration. Configuration profiles may be automatically selected by a network element based on one or more activation conditions specified in the configuration profiles.

Network elements may continuously and/or on an event-based manner evaluate the one or more activation conditions in the configuration profiles in order to select the matching configuration profiles for activation. Configuration profiles, optionally grouped in configuration profile groups, may be created outside the network elements and may be downloaded to the network elements for local storage. As such, configuration management can be enhanced.

While the present disclosure has been described in relation to exemplary embodiments, it is to be understood that this disclosure is only illustrative. Accordingly, it is intended that the invention be limited only by the scope of claims appended hereto.

## Claims

1. A method (200B) of configuring a network element (20) in a communication network (100), the method being performed by the network element (20) and comprising the steps of:
receiving (206) at least one configuration profile defining:
a first set of one or more parameter values for one or more associated configuration parameters of the network element (20); and
one or more activation conditions for the first set of one or more parameter values, wherein the one or more activation conditions relate to at least one of a network element type and a network element software version;
determining (208) whether or not the one or more activation conditions are fulfilled; and
if the one or more activation conditions are fulfilled, triggering (210) activation of the first set of one or more parameter values defined in the configuration profile for the one or more associated parameters.

2. The method of claim 1, wherein:
- the one or more activation conditions are defined via at least one of: a second set of one or more parameter values for one or more associated configuration parameters of the network element (20); and one or more status attributes of the network element (20); or
- the one or more activation conditions relate to the network element software version and wherein the configuration profile is received prior to at least one of installation and activation of a network element software version update at the network element (20).

3. The method of any of the preceding claims, wherein
the configuration profile is received as a configuration profile group comprising at least two configuration profiles.

4. The method of claim 3, wherein
- the configuration profiles in the configuration profile group are mutually exclusive in regard of their associated activation conditions; and/or
- the configuration profiles in the configuration profile group relate to at least one different one of the network element types and one different one of the network element software versions.

5. The method of any of the preceding claims, wherein
the activation of the one or more parameter values is only triggered if an enablement command pertaining to the configuration profile or a configuration profile group comprising the configuration profile has previously been received.

6. The method of any of the preceding claims, further comprising
monitoring (212), after having triggered an activation of the one or more parameters values defined in the configuration profile, if the one or more activation conditions defined in the configuration profile are fulfilled.

7. The method of claim 6, further comprising:
- if the one or more activation conditions defined in the configuration profile are not fulfilled, triggering at least one of the following operations: a deactivation of the one or more parameter values defined in the configuration profile, a transmission of a report message, and a change of a status attribute associated with the configuration profile or a configuration profile group comprising the configuration profile, wherein the report message optionally includes the status attribute or other information indicating that one or more activation conditions defined in the configuration profile are not fulfilled; and/or
- receiving the enablement command, wherein the enablement command defines the one or more operations triggered when the one or more activation conditions defined in the configuration profile are fulfilled.

8. The method of any of the preceding claims, wherein
the first set of one or more parameters values defined in the configuration profile is activated for at least one of a parameter value setting operation and a parameter value monitoring operation.

9. The method of claim 8, further comprising:
- receiving an instruction defining one of: that the first set of one or more parameter values is activated for the parameter value monitoring operation only; and that the first set of one or more parameter values is activated for the parameter value setting operation and followed by a parameter value monitoring operation; and/or
- monitoring, after having triggered an activation of the one or more parameters values defined in the configuration profile, if the one or more parameter values in the first set are observed.

10. The method of any of the preceding claims, wherein
the determining step is performed or repeated in at least one of the following situations:
when a new object instance associated with the configuration profile or a configuration profile group comprising the configuration profile is created on the network element; and
when a parameter value changes at the network element.

11. A method (200A) of configuring a network element (20) in a communication network (100), the method being performed by a network management component (10) and comprising the steps of:
storing (202) at least one configuration profile defining:
a set of one or more parameter values for one or more associated configuration parameters of the network element (20); and
one or more activation conditions for the set of one or more parameter values, wherein the one or more activation conditions relate to at least one of a network element type and a network element software version; and
sending (204) the configuration profile to at least one network element (20).

12. The method of claim 11, wherein:
- the configuration profile is sent in a configuration profile group comprising two or more configuration profiles; and/or
- the same configuration profile or configuration profile group is sent to multiple network elements (20); and/or
- the method further comprises sending a request message to the at least one network element (20) to which the configuration profile has been sent, the request message querying a result of a monitoring at the network element (20) of at least one of: if the one or more parameter values defined in the configuration profile are observed; if the one or more activation conditions defined in the configuration profile are fulfilled; and an activation status pertaining to the configuration profile or a configuration profile group comprising the configuration profile; and/or
- the method further comprises receiving, from the at least one network element (20), a report message indicative of at least one of an observation of the one or more parameter values defined in the configuration profile, a fulfilment of the one or more activation conditions defined in the configuration profile, and an activation status pertaining to the configuration profile or a configuration profile group comprising the configuration profile; and/or
- the method further comprises sending an enablement command to the at least one network element (20) to enable the configuration profile or a configuration profile group comprising the configuration profile at the at least one network element (20).

13. A computer-readable recording medium configured to store a computer program product comprising program code portions for performing the steps of any of the preceding claims when executed on one or more processing devices.

14. A network element (20) for a communication network (100), the network element (20) comprising:
an interface (24) configured to receive at least one configuration profile defining:
a first set of one or more parameter values for one or more associated configuration parameters of the network element; and
one or more activation conditions for the first set of one or more parameter values, wherein the one or more activation conditions relate to at least one of a network element type and a network element software version;
a processor (22) configured to:
- determine whether or not the one or more activation conditions are fulfilled, and,
- if the one or more activation conditions are fulfilled, trigger activation of the first set of one or more parameter values defined in the configuration profile for the one or more associated parameters.

15. A network management component (10) for configuring network elements (20) of a communication network (100), comprising:
a memory (16) storing at least one configuration profile defining:
a set of one or more parameter values for one or more associated configuration parameters of the network element (20); and
one or more activation conditions for the set of one or more parameter values, wherein the one or more activation conditions relate to at least one of a network element type and a network element software version; and
an interface (14) configured to send the configuration profile to at least one network element (20).

## Patentansprüche

1. Verfahren (200B) zum Konfigurieren eines Netzwerkelements (20) in einem Kommunikationsnetzwerk (100), wobei das Verfahren vom Netzwerkelement (20) durchgeführt wird und die folgenden Schritte umfasst:
Empfangen (206) mindestens eines Konfigurationsprofils, das Folgendes definiert:
einen ersten Satz eines oder mehrerer Parameterwerte für einen oder mehrere assoziierte Konfigurationsparameter des Netzwerkelements (20), und
eine oder mehrere Aktivierungsbedingungen für den ersten Satz eines oder mehrerer Parameterwerte, wobei die eine oder die mehren Aktivierungsbedingungen mindestens eines von einem Netzwerkelement-Typ und einer Netzwerkelement-Softwareversion betreffen;
Bestimmen (208), ob die eine oder die mehreren Aktivierungsbedingungen erfüllt werden oder nicht; und
Auslösen (210), wenn die eine oder die mehreren Aktivierungsbedingungen erfüllt werden, von Aktivierung des im Konfigurationsprofil definierten ersten Satzes eines oder mehrerer Parameterwerte für den einen oder die mehreren assoziierten Parameter.

2. Verfahren nach Anspruch 1, wobei:
- die eine oder die mehreren Aktivierungsbedingungen durch mindestens eines definiert werden von: einem zweiten Satz eines oder mehrerer Parameterwerte für einen oder mehrere assoziierte Konfigurationsparameter des Netzwerkelements (20); und ein oder mehrere Statusattribute des Netzwerkelements (20); oder
- die eine oder die mehreren Aktivierungsbedingungen die Netzwerkelement-Softwareversion betreffen, und wobei das Konfigurationsprofil vor mindestens einer von einer Installation und einer Aktivierung einer Aktualisierung der Netzwerkelement-Softwareversion am Netzwerkelement (20) empfangen wird.

3. Verfahren nach einem der vorhergehenden Ansprüche, wobei
das Konfigurationsprofil als eine Konfigurationsprofilgruppe empfangen wird, die mindestens zwei Konfigurationsprofile umfasst.

4. Verfahren nach Anspruch 3, wobei
- die Konfigurationsprofile in der Konfigurationsprofilgruppe sich hinsichtlich ihrer assoziierten Aktivierungsbedingungen gegenseitig ausschließen; und/oder
- die Konfigurationsprofile in der Konfigurationsprofilgruppe mindestens einen verschiedenen der Netzwerkelement-Typen und eine verschiedene der Netzwerkelement-Softwareversionen betreffen.

5. Verfahren nach einem der vorhergehenden Ansprüche, wobei
die Aktivierung des einen oder der mehreren Parameterwerte nur ausgelöst wird, wenn vorher ein Freigabebefehl in Bezug auf das Konfigurationsprofil oder die Konfigurationsprofilgruppe, die das Konfigurationsprofil umfasst, empfangen wurde.

6. Verfahren nach einem der vorhergehenden Ansprüche, ferner umfassend:
Überwachen (212) nach dem Auslösen einer Aktivierung des einen oder der mehreren im Konfigurationsprofil definierten Parameterwerte, ob die eine oder die mehreren im Konfigurationsprofil definierten Aktivierungsbedingungen erfüllt werden.

7. Verfahren nach Anspruch 6, ferner umfassend:
- Auslösen, wenn die eine oder die mehreren im Konfigurationsprofil definierte Aktivierungsbedingungen nicht erfüllt werden, mindestens eines der folgenden Vorgänge: eine Deaktivierung des einen oder der mehreren im Konfigurationsprofil definierten Parameterwerte, eine Übertragung einer Meldenachricht und eine Änderung eines Statusattributs, das mit dem Konfigurationsprofil oder einer Konfigurationsprofilgruppe assoziiert ist, die das Konfigurationsprofil umfasst, wobei die Meldenachricht optional das Statusattribut oder andere Informationen umfasst, die anzeigen, dass eine oder mehrere im Konfigurationsprofil definierte Aktivierungsbedingungen nicht erfüllt werden; und/oder
- Empfangen des Freigabebefehls, wobei der Freigabebefehl den einen oder die mehreren Vorgänge definiert, die ausgelöst werden, wenn die eine oder die mehreren im Konfigurationsprofil definierten Aktivierungsbedingungen erfüllt werden.

8. Verfahren nach einem der vorhergehenden Ansprüche, wobei
der im Konfigurationsprofil definierte erste Satz eines oder mehrerer Parameterwerte für mindestens einen von einem Parameterwert-Einstellvorgang und einem Parameterwert-Überwachungsvorgang aktiviert wird.

9. Verfahren nach Anspruch 8, ferner umfassend:
- Empfangen einer Anweisung, die eines von Folgendem definiert: dass der erste Satz eines oder mehrerer Parameterwerte nur für den Parameterwert-Überwachungsvorgang aktiviert wird; und dass der erste Satz eines oder mehrerer Parameterwerte für den Parameterwert-Einstellvorgang aktiviert wird und darauf ein Parameterwert-Überwachungsvorgang folgt; und/oder
- Überwachen nach dem Auslösen einer Aktivierung des einen oder der mehreren im Konfigurationsprofil definierten Parameterwerte, ob der eine oder die mehreren Parameterwerte im ersten Satz eingehalten werden.

10. Verfahren nach einem der vorhergehenden Ansprüche, wobei
der Bestimmungsschritt in mindestens einer der folgenden Situationen ausgeführt oder wiederholt wird:
wenn eine neue Objektinstanz, die mit dem Konfigurationsprofil oder einer Konfigurationsprofilgruppe assoziiert ist, die das Konfigurationsprofil umfasst, am Netzwerkelement erstellt wird; und
wenn ein Parameterwert sich am Netzwerkelement ändert.

11. Verfahren (200A) zum Konfigurieren eines Netzwerkelements (20) in einem Kommunikationsnetzwerk (100), wobei das Verfahren von einer Netzwerkverwaltungskomponente (10) durchgeführt wird und die folgenden Schritte umfasst:
Speichern (202) mindestens eines Konfigurationsprofils, das Folgendes definiert:
einen Satz eines oder mehrerer Parameterwerte für einen oder mehrere assoziierte Konfigurationsparameter des Netzwerkelements (20), und
eine oder mehrere Aktivierungsbedingungen für den Satz eines oder mehrerer Parameterwerte, wobei die eine oder die mehren Aktivierungsbedingungen mindestens eines von einem Netzwerkelement-Typ und einer Netzwerkelement-Softwareversion betreffen; und
Senden (204) des Konfigurationsprofils an mindestens ein Netzwerkelement (20).

12. Verfahren nach Anspruch 11, wobei:
- das Konfigurationsprofil in einer Konfigurationsprofilgruppe gesendet wird, die zwei oder mehr Konfigurationsprofile umfasst; und/oder
- dasselbe Konfigurationsprofil oder dieselbe Konfigurationsprofilgruppe an mehrere Netzwerkelemente (20) gesendet wird; und/oder
- das Verfahren ferner ein Senden einer Abfragenachricht an das mindestens eine Netzwerkelement (20) umfasst, an welches das Konfigurationsprofil gesendet wurde, wobei die Abfragenachricht ein Ergebnis eines Überwachens am Netzwerkelement (20) im Hinblick auf mindestens eines von Folgendem abfragt: ob der eine oder die mehreren im Konfigurationsprofil definierten Parameterwerte eingehalten werden; ob die eine oder die mehreren im Konfigurationsprofil definierten Aktivierungsbedingungen erfüllt werden; und einen Aktivierungsstatus in Bezug auf das Konfigurationsprofil oder eine Konfigurationsprofilgruppe, die das Konfigurationsprofil umfasst; und/oder
- das Verfahren ferner ein Empfangen einer Meldenachricht von dem mindestens einen Netzwerkelement (20) umfasst, die mindestens eines von einer Einhaltung des einen oder der mehreren im Konfigurationsprofil definierten Parameterwerte; einer Erfüllung der einen oder der mehreren im Konfigurationsprofil definierten Aktivierungsbedingungen; und einem Aktivierungsstatus in Bezug auf das Konfigurationsprofil oder eine Konfigurationsprofilgruppe umfasst, die das Konfigurationsprofil umfasst; und/oder
- das Verfahren ferner ein Senden eines Freigabebefehls an das mindestens eine Netzwerkelement (20) zum Freigeben des mindestens einen Konfigurationsprofils oder einer Konfigurationsprofilgruppe, die das Konfigurationsprofil umfasst, an dem mindestens einen Netzwerkelement (20) umfasst.

13. Computerlesbares Aufzeichnungsmedium, das zum Speichern eines Computerprogrammprodukts konfiguriert ist, das Programmcodeabschnitte zum Ausführen der Schritte nach einem der vorhergehenden Ansprüche umfasst, wenn auf einer oder mehreren Verarbeitungsvorrichtungen ausgeführt.

14. Netzwerkelement (20) für ein Kommunikationsnetzwerk (100), wobei das Netzwerkelement (20) umfasst:
eine Schnittstelle (24), die zum Empfangen mindestens eines Konfigurationsprofils konfiguriert ist, das Folgendes definiert:
einen ersten Satz eines oder mehrerer Parameterwerte für einen oder mehrere assoziierte Konfigurationsparameter des Netzwerkelements; und
eine oder mehrere Aktivierungsbedingungen für den ersten Satz eines oder mehrerer Parameterwerte, wobei die eine oder die mehren Aktivierungsbedingungen mindestens eines von einem Netzwerkelement-Typ und einer Netzwerkelement-Softwareversion betreffen;
einen Prozessor (22), der konfiguriert ist zum:
- Bestimmen, ob die eine oder die mehreren Aktivierungsbedingungen erfüllt werden oder nicht, und
- Auslösen, wenn die eine oder die mehreren Aktivierungsbedingungen erfüllt werden, von Aktivierung des im Konfigurationsprofil definierten ersten Satzes eines oder mehrerer Parameterwerte für den einen oder die mehreren assoziierten Parameter.

15. Netzwerkverwaltungskomponente (10) zum Konfigurieren von Netzwerkelementen (20) eines Kommunikationsnetzwerks (100), umfassend:
einen Speicher (16), der mindestens eines Konfigurationsprofil speichert, das Folgendes definiert:
einen Satz eines oder mehrerer Parameterwerte für einen oder mehrere assoziierte Konfigurationsparameter des Netzwerkelements (20), und
eine oder mehrere Aktivierungsbedingungen für den Satz eines oder mehrerer Parameterwerte, wobei die eine oder die mehren Aktivierungsbedingungen mindestens eines von einem Netzwerkelement-Typ und einer Netzwerkelement-Softwareversion betreffen; und
eine Schnittstelle (14), die zum Senden des Konfigurationsprofils an mindestens ein Netzwerkelement (20) konfiguriert ist.

## Revendications

1. Procédé (200B) de configuration d'un élément de réseau (20) dans un réseau de communication (100), le procédé étant réalisé par l'élément de réseau (20) et comprenant les étapes de :
la réception (206) d'au moins un profil de configuration définissant :
un premier ensemble d'une ou plusieurs valeurs de paramètres pour un ou plusieurs paramètres associés de l'élément de réseau (20) ; et
une ou plusieurs conditions d'activation pour le premier ensemble d'une ou plusieurs valeurs de paramètres, dans lequel les une ou plusieurs conditions d'activation concernent au moins l'un parmi un type d'élément de réseau et une version logicielle d'élément de réseau ;
la détermination (208) si les une ou plusieurs conditions d'activation sont ou non satisfaites ; et
si les une ou plusieurs conditions d'activation sont satisfaites, le déclenchement (210) de l'activation du premier ensemble d'une ou plusieurs valeurs de paramètres définies dans le profil de configuration pour les un ou plusieurs paramètres associés.

2. Procédé selon la revendication 1, dans lequel :
- les une ou plusieurs conditions d'activation sont définies via au moins l'un parmi : un deuxième ensemble d'une ou plusieurs valeurs de paramètres pour un ou plusieurs paramètres de configuration associés de l'élément de réseau (20) ; et un ou plusieurs attributs de statut de l'élément de réseau (20) ; ou
- les une ou plusieurs conditions d'activation concernent la version logicielle d'élément de réseau et dans lequel le profil de configuration est reçu avant au moins l'une parmi l'installation et l'activation d'une mise à jour de version logicielle d'élément de réseau à l'élément de réseau (20).

3. Procédé selon l'une quelconque des revendications précédentes, dans lequel
le profil de configuration est reçu en tant qu'un groupe de profils de configuration comprenant au moins deux profils de configuration.

4. Procédé selon la revendication 3, dans lequel
- les profils de configuration dans le groupe de profils de configuration sont mutuellement exclusifs en ce qui concerne leurs conditions d'activation associées ; et/ou
- les profils de configuration dans le groupe de profils de configuration concernent au moins l'un différent parmi les types d'éléments de réseau et l'une différente parmi les versions logicielles d'élément de réseau.

5. Procédé selon l'une quelconque des revendications précédentes, dans lequel
l'activation des une ou plusieurs valeurs de paramètres n'est déclenchée que si une commande d'habilitation concernant le profil de configuration ou un groupe de profils de configuration comprenant le profil de configuration a préalablement été reçue.

6. Procédé selon l'une quelconque des revendications précédentes, comprenant en outre
la surveillance (212), après avoir déclenché une activation des une ou plusieurs valeurs de paramètres définies dans le profil de configuration, si les une ou plusieurs conditions d'activation définies dans le profil de configuration sont satisfaites.

7. Procédé selon la revendication 6, comprenant en outre :
- si les une ou plusieurs conditions d'activation définies dans le profil de configuration ne sont pas satisfaites, le déclenchement d'au moins l'une des opérations suivantes : une désactivation des une ou plusieurs valeurs de paramètres définies dans le profil de configuration, une transmission d'un message de rapport, et un changement d'un attribut de statut associé au profil de configuration ou à un groupe de profils de configuration comprenant le profil de configuration, dans lequel le message de rapport inclut facultativement l'attribut de statut ou d'autres informations indiquant qu'une ou plusieurs conditions d'activation définies dans le profil de configuration ne sont pas satisfaites ; et/ou
- la réception de la commande d'habilitation, dans lequel la commande d'habilitation définit les une ou plusieurs opérations déclenchées lorsque les une ou plusieurs conditions d'activation définies dans le profil de configuration sont satisfaites.

8. Procédé selon l'une quelconque des revendications précédentes, dans lequel
le premier ensemble d'une ou plusieurs valeurs de paramètres définies dans le profil de configuration est activé pour au moins l'une parmi une opération de réglage de valeur de paramètre et une opération de surveillance de valeur de paramètre.

9. Procédé selon la revendication 8, comprenant en outre :
- la réception d'une instruction définissant l'un parmi : le premier ensemble d'une ou plusieurs valeurs de paramètres est activé uniquement pour l'opération de surveillance de valeur de paramètre ; et le premier ensemble d'une ou plusieurs valeurs de paramètres est activé pour l'opération de réglage de valeur de paramètre et suivi par une opération de surveillance de valeur de paramètre ; et/ou
- la surveillance, après avoir déclenché une activation des une ou plusieurs valeurs de paramètres définies dans le profil de configuration, si les une ou plusieurs valeurs de paramètres dans le premier ensemble sont observées.

10. Procédé selon l'une quelconque des revendications précédentes, dans lequel
l'étape de détermination est réalisée ou répétée dans au moins l'une des situations suivantes :
lorsqu'une nouvelle instance d'objet associée au profil de configuration ou à un groupe de profils de configuration comprenant le profil de configuration est créée sur l'élément de réseau ; et
lorsqu'une valeur de paramètre change à l'élément de réseau.

11. Procédé (200A) de configuration d'un élément de réseau (20) dans un réseau de communication (100), le procédé étant réalisé par un composant de gestion de réseau (10) et comprenant les étapes de :
le stockage (202) d'au moins un profil de configuration définissant :
un ensemble d'une ou plusieurs valeurs de paramètres pour un ou plusieurs paramètres de configuration associés de l'élément de réseau (20) ; et
une ou plusieurs conditions d'activation pour l'ensemble d'une ou plusieurs valeurs de paramètres, dans lequel les une ou plusieurs conditions d'activation concernent au moins l'un parmi un type d'élément de réseau et une version logicielle d'élément de réseau ; et
l'envoi (204) du profil de configuration à au moins un élément de réseau (20).

12. Procédé selon la revendication 11, dans lequel :
- le profil de configuration est envoyé dans un groupe de profils de configuration comprenant deux profils de configuration ou plus ; et/ou
- le même profil de configuration ou le même groupe de profils de configuration est envoyé à plusieurs éléments de réseau (20) ; et/ou
- le procédé comprend en outre l'envoi d'un message de demande à l'au moins un élément de réseau (20) auquel le profil de configuration a été envoyé, le message de demande demandant un résultat d'une surveillance à l'élément de réseau (20) d'au moins l'un parmi : si les une ou plusieurs valeurs de paramètres définies dans le profil de configuration sont observées ; si les une ou plusieurs conditions d'activation définies dans le profil de configuration sont satisfaites ; et un statut d'activation concernant le profil de configuration ou un groupe de profils de configuration comprenant le profil de configuration ; et/ou
- le procédé comprend en outre la réception, depuis l'au moins un élément de réseau (20), d'un message de rapport indicatif d'au moins l'un parmi une observation des une ou plusieurs valeurs de paramètres définies dans le profil de configuration, une satisfaction des une ou plusieurs conditions d'activation définies dans le profil de configuration, et un statut d'activation concernant le profil de configuration ou un groupe de profils de configuration comprenant le profil de configuration ; et/ou
- le procédé comprend en outre l'envoi d'une commande d'habilitation à l'au moins un élément de réseau (20) pour habiliter le profil de configuration ou un groupe de profils de configuration comprenant le profil de configuration à l'au moins un élément de réseau (20) .

13. Support d'enregistrement lisible par ordinateur configuré pour stocker un produit de programme informatique comprenant des portions de code de programme pour réaliser les étapes selon l'une quelconque des revendications précédentes, lorsqu'elles sont exécutées sur un ou plusieurs dispositifs de traitement.

14. Elément de réseau (20) pour un réseau de communication (100), l'élément de réseau (20) comprenant :
une interface (24) configurée pour recevoir au moins un profil de configuration définissant :
un premier ensemble d'une ou plusieurs valeurs de paramètres pour un ou plusieurs paramètres de configuration associés de l'élément de réseau ; et
une ou plusieurs conditions d'activation pour le premier ensemble d'une ou plusieurs valeurs de paramètres, dans lequel les une ou plusieurs conditions d'activation concernent au moins l'un parmi un type d'élément de réseau et une version logicielle d'élément de réseau ;
un processeur (22) configuré pour :
- la détermination si les une ou plusieurs conditions d'activation sont ou non satisfaites, et
- si les une ou plusieurs conditions d'activation sont satisfaites, le déclenchement de l'activation du premier ensemble d'une ou plusieurs valeurs de paramètres définies dans le profil de configuration pour les un ou plusieurs paramètres associés.

15. Composant de gestion de réseau (10) pour configurer des éléments de réseau (20) d'un réseau de communication (100), comprenant :
une mémoire (16) stockant au moins un profil de configuration définissant :
un ensemble d'une ou plusieurs valeurs de paramètres pour un ou plusieurs paramètres de configuration associés de l'élément de réseau (20) ; et
une ou plusieurs conditions d'activation pour l'ensemble d'une ou plusieurs valeurs de paramètres, dans lequel les une ou plusieurs conditions d'activation concernent au moins l'un parmi un type d'élément de réseau et une version logicielle d'élément de réseau ; et
une interface (14) configurée pour l'envoi du profil de configuration à au moins un élément de réseau (20).
